# EUROPEAN PATENT APPLICATION

(11) **EP 2 464 087 A1**
(43) Date of publication of application: **13.06.2012**
(21) Application number: 10814900.6
(22) Date of filing: 24.03.2010
(51) Int. Cl.: H04M 3/42

(54) **EXHIBITION METHOD AND APPARATUS FOR MULTI-MEDIA COLOR RING BACK TONE RESOURCE BOX**

(30) Priority: 09.09.2009 CN 200910092861
(71) Applicant: ZTE Corporation, Shenzhen, Guangdong 518057 (CN)
(72) Inventor: DONG, Hao, Shenzhen Guangdong 518057 (CN); HUANG, Zheng, Shenzhen Guangdong 518057 (CN)
(74) Representative: Schröer, Gernot H.
(86) International application number: PCT/CN2010/071278
(87) International publication number: WO 2011/029298

(57) **Abstract**

The present invention discloses an exhibition method for a multimedia color ring back tone resource box. The method includes: the user defining a multimedia color ring back tone resource box and setting a multimedia color ring back tone exhibition rule; during using a multimedia color ring back tone service, according to the multimedia color ring back tone exhibition rule, selecting a multimedia color ring back tone from the resource box to exhibit. The present invention also discloses an exhibition apparatus for a multimedia color ring back tone resource box. The exhibition apparatus includes: a providing unit, for providing a resource box to a user, wherein multimedia color ring back tones defined by the user are stored in the resource box; a setting unit, for setting a multimedia color ring back tone exhibition rule by the user; and an exhibition unit, for, in the process of a call service, according to the multimedia color ring back tone exhibition rule, selecting a multimedia color ring back tone from the resource box and exhibiting. The present invention meets the personalized requirement of the user on the multimedia color ring back tones, and realizes the diversity support of the multimedia color ring back tones.

## Description

### Technical Field

The present invention relates to an exhibition technology for multimedia color ring back tones of a user terminal, and particularly, to an exhibition method and apparatus for a multimedia color ring back tone resource box.

### Background of the Related Art

The content of the traditional color ring back tones exhibited to the user is generally only the media with audio format, comprising a variety of ring tones, such as songs, music, natural sounds such as bird tweet, and personalized ring tones made by the user itself. During using the service, besides that the user can set one certain ring tone to be exhibited in a call process, a plurality of ring tones can be packed into a ring box, and in the subsequent call process, the user can select the ring tone from the ring box in a certain order and exhibit the selected ring tone to the called user.

The exhibition contents of multimedia color ring back tones are extended, besides of audios, the contents can also be multimedia contents such as videos, texts, pictures and VCards, and so on, or their combination. These contents are called multimedia color ring back tone resources. Similar to the ring box in the traditional color ring back tone service, the user has the following need: multiple resources in these multimedia color ring back tone resources are formed into a resource box, and the user selects the resource from the resource box to exhibit in a certain order in the subsequent process of using the service.

Due to the diversity of resource types in the multimedia color ring back tone service, it needs to study how to define and set the resource box, and how to exhibit the content in the resource box in the process of using the service, and so on.

### Content of the Invention

In view of that, the main purpose of the present invention is to provide an exhibition method and apparatus for a multimedia color ring back tone resource box to provide the set multimedia color ring back tone to the called user according to the mode set by the user.

To achieve the aforementioned purpose, the technical solution of the present invention is implemented as follows.

An exhibition method for a multimedia color ring back tone resource box is realized; in the method, a user defines a multimedia color ring back tone resource box and sets a multimedia color ring back tone exhibition rule; and the method comprises:
in the process of using a multimedia color ring back tone service, according to the multimedia color ring back tone exhibition rule set by the user, selecting a multimedia color ring back tone from the resource box to exhibit.

Preferably, the user defining the multimedia color ring back tone resource box is:
the user selecting the corresponding multimedia color ring back tones and uploading to the resource box;
or, the user selecting multimedia color ring back tones from multimedia color ring back tone resources provided by a multimedia color ring back tone server, and storing in the resource box;
or, the user selecting the corresponding multimedia color ring back tones and uploading to the resource box, and, the user selecting multimedia color ring back tones from multimedia color ring back tone resources provided by a multimedia color ring back tone server, and storing in the resource box.

Preferably, the multimedia color ring back tone exhibition rule comprises:
according to the order of multimedia color ring back tones stored in the resource box, cyclically and sequentially exhibiting the multimedia color ring back tone to the called user which the user calls;
or, randomly selecting one of the multimedia color ring back tones stored in the resource box and exhibiting to the called user which the user calls.

Preferably, the multimedia color ring back tone comprises, but not limited to, at least one of the following resources: an audio file, a video file, a text file, a picture, and a VCard.

An exhibition apparatus for a multimedia color ring back tone resource box comprises: a providing unit, configured to provide a resource box to a user, wherein the resource box stores multimedia color ring back tones defined by the user; the apparatus further comprises a setting unit and an exhibition unit, wherein:
the setting unit is configured to set a multimedia color ring back tone exhibition rule by the user;
the exhibition unit is configured to, in the process of a call service, according to the multimedia color ring back tone exhibition rule, select a multimedia color ring back tone from the resource box to exhibit.

Preferably, the multimedia color ring back tones stored in the resource box are uploaded by the users;
or, the multimedia color ring back tones stored in the resource box are selected by the user from multimedia color ring back tone resources provided by a multimedia color ring back tone server;
or, the multimedia color ring back tones stored in the resource box are uploaded by the user, and are selected from multimedia color ring back tone resources provided by a multimedia color ring back tone server.

Preferably, the multimedia color ring back tone exhibition rule comprises:
according to an order of multimedia color ring back tones stored in the resource box, cyclically and sequentially exhibiting the multimedia color ring back tone to the called user which the user calls;
or, randomly selecting one of the multimedia color ring back tones stored in the resource box and exhibiting to the called user which the user calls.

Preferably, the multimedia color ring back tone comprises, but not limited to, at least one of the following resources: an audio file, a video file, a text file, a picture, and a VCard.

In the present invention, the multimedia color ring back tone server provides a multimedia ring back tone resource box to the user to store multimedia color ring back tones selected by the user or multimedia color ring back tone files uploaded by the user, and accepts setting of a multimedia color ring back tone exhibition rule by the user; therefore, when receiving a call service of a user, the multimedia color ring back tone desired by the user can be exhibited to a called user according to the exhibition rule set by the user, thus meeting the personalized requirement of the user on multimedia color ring back tones and realizing the the diversity support of color ring back tones.

### Brief Description of Drawings

FIG. 1 is a flow chart of an exhibition method for a multimedia color ring back tone resource box in accordance with the present invention; and
FIG. 2 is a structure diagram of an exhibition apparatus for a multimedia color ring back tone resource box in accordance with the present invention.

### Preferred Embodiments of the Present Invention

The basic idea of the present invention is that: the multimedia color ring back tone server provides a multimedia ring back tone resource box to the user to store multimedia color ring back tones selected by the user or multimedia color ring back tone files uploaded by the user, and accepts setting of a multimedia color ring back tone exhibition rule by the user; therefore, when receiving a call service of a user, the multimedia color ring back tone desired by the user can be exhibited to a called user according to the exhibition rule set by the user, thus meeting the personalized requirement of the user on multimedia color ring back tones and realizing the the diversity support of color ring back tones.

To make the purposes, technical solution and advantages of the present invention more clear, the present invention will be further described in detail in combination with the accompanying drawings and embodiments.

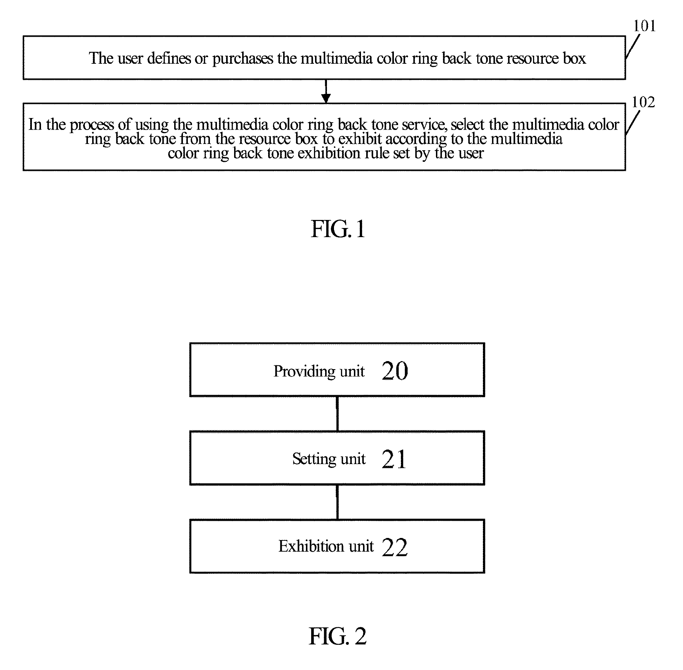

FIG. 1 is a flow chart of an exhibition method for a multimedia color ring back tone resource box in accordance with the present invention, and as shown in FIG. 1, the exhibition method for the multimedia color ring back tone resource box in accordance with the present invention comprises the following steps.

In step 101, the multimedia color ring back tone resource box is provided to the user.

The purpose of the present invention is to make the user of the multimedia color ring back tone be able to define their own resource box or purchase the resource box defined by the service provider (SP), and set the resource box exhibition rule; in the process of using the service, according to the exhibition rule set by the user, the resource is selected from the resource box to exhibit. The operator provides the multimedia color ring back tone resource box to the user through a multimedia color ring back tone server, and the resource box can store a variety of multimedia color ring back tones, including audio files, video files, text files, pictures, VCards. Wherein, the audio content comprises songs, music and voices, and so on; the video content can be a section of movie clips and movie segments shot by the user itself, and so on; the texts is a block of text expressing the user information or the personalized content; the picture is image resources set by the user and having a certain meanings and personalized information; the VCard is an electronic business card recording the contact information, and the information included in the VCard is name, address information, phone number, email address, logo, photo, and so on. For any kind of the resource categories, many different resources might be included in. For example, for the text category, the user can set the text content to reflect its own information or set a variety of personalized text contents to express its own interests or feelings. For the VCard, in addition to basic information such as name and address, the user can set different logos and photos, thus to form multiple VCards of the user to be exhibited in different situations.

The resource box can be defined as: composing of a plurality of same type of multimedia color ring back tone resources, and predefining the rule of selecting one resource from the resource box to exhibit, which can also be a combination of various kinds of aforementioned multimedia color ring back tone resources.

The multimedia color ring back tone resources in the multimedia color ring back tone server store fields shown in Table 1:

**Table 1**

| Field name | Data type | Description |
|---|---|---|
| ResourceID | String | Resource ID |
| ResourceName | String | Resource name |
| MediaType | Enum | Media type of the resource, comprising: "Audio", "Video", "Text", "Picture", "VCard" |
| ResourceInfo | String | The file storage location information of the resource |

The multimedia color ring back tone resources in the resource box store fields as shown in Table 2:

**Table 2**

| Field name | Data type | Description |
|---|---|---|
| ResourceBoxID | String | Resource box ID |
| ResourceBoxName | String | Resource box name |
| Media Type | Enum | Media type of the resource box, comprising: "Audio", "Video", "Text", "Picture", "VCard" |
| ResourceNum | Integer | The number of resources in the resource box |
| IncludeResource | String | A string consisting of a plurality of resource IDs and separated with separators |

In the process of multimedia color ring back tone service, the multimedia color ring back tone system selects the resource box needing to be used according to the user settings; if necessary, performs the media negotiation according to the media type of the resource box; determines the resources needed to be exhibited from the resource box according to the resource box exhibition rule; and then exhibits the determined media resource.

In step 102, in the process of the call service initiated by the user, according to the multimedia color ring back tone exhibition rule set by the user, the multimedia color ring back tone is selected from the resource box for the called user and the selected multimedia color ring back tone is exhibited to the called user.

For the multimedia color ring back tone service, in general, one resource will be selected to exhibit in one application scenario. This selection is performed in accordance with a certain preferred rule. For example, for a specific opposite user, a fixed resource should be exhibited to the opposite party when using the service. For the convenience of using the service and personalized consideration, the users usually have such requirement: in the process of using the service twice, the resources which are not repeated can be exhibited. For example, in the call, although the opposite calling uses are the same, the ring tone resource A is played in the last call, and the ring tone resource B is played in this call. This can give the user a good service experience. Since the media negotiation of the resource is generally performed before playing the resource in the process of using the service, for a particular resource box, all the resources of which the resource box consists should have the same media type, and this is convenient for the media information interaction in the process of using the service.

The resource box exhibition rule is the exhibition order of the resources in the resource box. There are two types of exhibition orders: one is random exhibition, that is, randomly select one resource from the resource box to exhibit at each time of using the resource box; the other is sequential exhibition, that is, sequentially exhibit the resources according to resource IDs at each time of using the resource box. The exhibition rule stores fields shown in Table 3:

**Table 3**

| Field name | Data type | Description |
|---|---|---|
| ResourceBoxID | String | Resource box ID |
| UserID | String | The ID of the user who uses the resource box |
| PresentRule | Integer | Randomly select a color ring back tone to exhibit Sequentially select a color ring back tones to exhibit |
| CurrentResourceI D | String | The ID of the resource used by the current service |

In the process of multimedia color ring back tone service, the multimedia color ring back tone system selects the resource box needed to be used according to the user settings; if necessary, performs the media negotiation according to the media type of the resource box; determines the resources required to be exhibited from the resource box according to the resource box exhibition rule; and then exhibits the determined media resource.

In the following, the substance of the technical solution of the present invention will be further illustrated with an example.

A user defines his/her resource box, and the resource box is the "Audio" type, that is, media resources with audio format. The resource box consists of four audio resources whose IDs are respectively AuRes001, AuRes002, AuRes003 and AuRes004. The resource name and resource information represented by the resource ID are omitted and are not described. Meanwhile, the resource box exhibition rule set by the user are sequential exhibition, and the CurrentResourceID of the resource that is exhibited from the resource box in the last process of using the service is AuRes002.

In a new process of using the multimedia color ring back tone service, for example, the user receives a new call, and then the multimedia color ring back tone service server determines to use the aforementioned resource box. Firstly, the multimedia color ring back tone service server and the opposite user perform the audio media negotiation, and after the negotiation is successful, an exhibition control module queries that the resource used in the last service is AuRes002 according to the exhibition rule set by the user (sequentially and cyclically exhibiting), determines the exhibiting resource used by the current service is AuRes003 according to the resource ID order, and then exhibits the AuRes003 resource to the opposite user.

FIG. 2 is a structure diagram of an exhibition apparatus for a multimedia color ring back tone resource box in accordance with the present invention, and as shown in FIG. 2, the exhibition apparatus for the multimedia color ring back tone resource box in accordance with the present invention comprises a providing unit 20, a setting unit 21 and an exhibition unit 22; wherein, the providing unit 20 is used to provide the resource box to the user, and the resource box stores multimedia color ring back tones defined by the user; the setting unit 21 is used to set a multimedia color ring back tone exhibition rule by the user; the exhibition unit 22 is used to select a multimedia color ring back tone from the resource box for the called user according to the multimedia color ring back tone exhibition rule set by the user in the process of the call service initiated by the user and to exhibit the selected multimedia color ring back tone to the called user. The multimedia color ring back tone resources stored in the resource box are uploaded by the user; or, the multimedia color ring back tone resources stored in the resource box are selected by the user from said multimedia color ring back tone resources provided by the multimedia color ring back tone server; or, the multimedia color ring back tones stored in the resource box are the multimedia color ring back tones uploaded by the user, and the multimedia color ring back tones selected from the multimedia color ring back tone resources provided by the multimedia color ring back tone server. The multimedia color ring back tone exhibition rule comprises: according to the order of multimedia color ring back tones stored in the resource box, cyclically and sequentially exhibiting the multimedia color ring back tone to the called user which the user calls; or, randomly selecting one of the multimedia color ring back tones stored in the resource box and exhibit the selected multimedia color ring back tone to the called user which the user calls. The multimedia color ring back tone comprises but not limited to at least one of the following resources: the audio file, the video file, the text file, the picture, and the VCard.

Those skilled in the art should understand that, the exhibition apparatus for the multimedia color ring back tone resource box shown in FIG. 2 is set for achieving the aforementioned exhibition method for the multimedia color ring back tone resource box, and the implementation functions of each processing unit in FIG. 2 can be understood by referring to the relevant description in the aforementioned method. The function of each processing unit in the apparatus shown in FIG. 2 can be realizing by programs running on the processor or by specific logic circuits.

The above description is only the preferred embodiments of the present invention, and is not intended to limit the scope of the present invention.

## Claims

1. An exhibition method for a multimedia color ring back tone resource box, a user defining a multimedia color ring back tone resource box and setting a multimedia color ring back tone exhibition rule; wherein, the method comprises:
in the process of using a multimedia color ring back tone service,
according to the multimedia color ring back tone exhibition rule,
selecting a multimedia color ring back tone from the resource box to exhibit.

2. The method according to claim 1, wherein, the user defining the multimedia color ring back tone resource box is:
the user selecting the corresponding multimedia color ring back tones and uploading to the resource box;
or, the user selecting multimedia color ring back tones from multimedia color ring back tone resources provided by a multimedia color ring back tone server, and storing in the resource box;
or, the user selecting the corresponding multimedia color ring back tones and uploading to the resource box, and, the user selecting multimedia color ring back tones from multimedia color ring back tone resources provided by a multimedia color ring back tone server, and storing in the resource box.

3. The method according to claim 1 or 2, wherein, the multimedia color ring back tone exhibition rule comprises:
according to the order of multimedia color ring back tones stored in the resource box, cyclically and sequentially exhibiting the multimedia color ring back tone to the called user which the user calls;
or, randomly selecting one of the multimedia color ring back tones stored in the resource box and exhibiting to the called user which the user calls.

4. The method according to claim 1 or 2, wherein, the multimedia color ring back tone comprises, but not limited to, at least one of the following resources: an audio file, a video file, a text file, a picture, and a VCard.

5. An exhibition apparatus for a multimedia color ring back tone resource box, comprising: a providing unit, configured to provide a resource box to a user, wherein the resource box stores multimedia color ring back tones defined by the user; **characterized in that**, the apparatus further comprises a setting unit and an exhibition unit, wherein:
the setting unit is configured to set a multimedia color ring back tone exhibition rule by the user;
the exhibition unit is configured to, in the process of a call service, according to the multimedia color ring back tone exhibition rule, select a multimedia color ring back tone from the resource box to exhibit.

6. The apparatus according to claim 5, wherein, the multimedia color ring back tones stored in the resource box are uploaded by the user; or, the multimedia color ring back tones stored in the resource box are selected by the user from multimedia color ring back tone resources provided by a multimedia color ring back tone server;
or, the multimedia color ring back tones stored in the resource box are uploaded by the user, and are selected from multimedia color ring back tone resources provided by a multimedia color ring back tone server.

7. The apparatus according to claim 5 or 6, wherein, the multimedia color ring back tone exhibition rule comprises:
according to the order of multimedia color ring back tones stored in the resource box, cyclically and sequentially exhibiting the multimedia color ring back tone to the called user which the user calls;
or, randomly selecting one of the multimedia color ring back tones stored in the resource box and exhibiting to the called user which the user calls.

8. The apparatus according to claim 5 or 6, wherein, the multimedia color ring back tone comprises, but not limited to, at least one of the following resources: an audio file, a video file, a text file, a picture, and a VCard.
